(19) Europäisches Patentamt
European Patent Office
Office européen des brevets

(11) Veröffentlichungsnummer: **0 002 745**
**B1**

(12) # EUROPÄISCHE PATENTSCHRIFT

(45) Veröffentlichungstag der Patentschrift: **25.11.81**

(51) Int. Cl.³: **C 08 L 83/04**

(21) Anmeldenummer: **78101705.8**

(22) Anmeldetag: **15.12.78**

(54) **Härtbare Massen auf Grundlage von Polyorganosiloxanen und Titanestern.**

(30) Priorität: **19.12.77 US 861769**

(43) Veröffentlichungstag der Anmeldung:
**11.07.79 Patentblatt 79/14**

(45) Bekanntmachung des Hinweises auf die Patenterteilung:
**25.11.81 Patentblatt 81/47**

(84) Benannte Vertragsstaaten:
**BE CH DE FR GB NL**

(56) Entgegenhaltungen:
**FR - A - 2 086 452**
**FR - A - 2 098 279**

(73) Patentinhaber: **SWS Silicones Corporation**
**Adrian/Michigan 49221 (US)**

(72) Erfinder: **Getson, John C.**
**4394, Hampton Court**
**Adrian/Michigan 49221 (US)**
Erfinder: **Johnson, Wendell L.**
**1010 Scottdale Drive**
**Adrian/Michigan 49221 (US)**

(74) Vertreter: **Wagner, Helga, Dr.**
**c/o Wacker-Chemie GmbH**
**Prinzregentenstrasse 22**
**D-8000 München 22 (DE)**

**EP 0 002 745 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Härtbare Massen auf Grundlage von Polyorganosiloxanen und Titanestern

Gegenstand der Erfindung sind Massen auf Polyorganosiloxangrundlage, die bei Raumtemperatur unter Zutritt der Luftfeuchtigkeit zu Elastomeren härten. Derartige Massen haben eine ausgezeichnete Lagerbeständigkeit, worunter zu verstehen ist, daß sie ihre Eigenschaften auch nach tage- bis monatelanger Lagerung unverändert beibehalten.

Bei Raumtemperatur härtbare Massen, die als wesentliche Bestandteile Polyorganosiloxane, Organosiliciumverbindungen und Titanverbindungen enthalten, sind bekannt. So werden beispielsweise in der US—PS 3.151.099 derartige Massen aus flüssigen, in den endständigen Einheiten Hydroxylgruppen aufweisenden linearen Polyorganosiloxanen, Kieselsäureestern, Titanestern, gegebenenfalls inerten Füllstoffen und flüssigen Verdünnungsmitteln, die bei Raumtemperatur in Gegenwart von Feuchtigkeit zu Elastomeren gehärtet werden können, beschrieben. In der US—PS 3.378.520 werden bei Raumtemperatur härtbare Massen aus in den endständigen Einheiten Alkoxygruppen aufweisenden Polyorganosiloxanen, einem Silan mit mindestens 3 Si-N-gebundenen Carbonsäureamidresten als Vernetzer und einer Titan-Komplexverbindung, die durch Umsetzung eines Titanalkoholats mit einer difunktionellen Ketoverbindung hergestellt worden ist, beschrieben. In der US—PS 3.409.573 werden härtbare Massen aus hydroxylierten alpha, omega-Polydiorganosiloxanen, einem Vernetzer und einem Katalysator, der durch Umsetzung eines Diorganozinn-dicarboxylats mit einem Orthotitanester hergestellt worden ist, beschrieben, und in der US—PS 3.161.614 werden bei Raumtemperatur unter Zutritt von Feuchtigkeit härtbare Massen aus in den endständigen Einheiten Alkoxygruppen aufweisenden Polydiorganosiloxanen und Titanestern als Katalysatoren beschrieben.

Desgleichen werden in der FR—PS 2.086.482 bei Raumtemperatur härtbare Massen auf bekannter Grundlage von Polyorganosiloxanen, Alkoxysilanen und Titankatalysatoren beschrieben, die Talk enthalten, wodurch die Haftfestigkeit auf Metalloberflächen verbessert werden soll. Wie aus den Beispielen in dieser FR—PS ersichtlich, werden gemischte Systeme verwendet, das sind Massen, in welchen sowohl Methoxygruppen als auch Isopropoxygruppen vorhanden sind.

Es wurde jedoch festgestellt, daß die Massen der oben genannten Zusammensetzungen nur sehr begrenzt lagerbeständig sind, auch wenn sie unter praktisch wasserfreien Bedingungen gelagert werden und daß sich ihre Eigenschaften mit zunehmender Lagerzeit verschlechtern.

Der Erfindung liegt daher die Aufgabe zugrunde, unter Ausschluß von Wasser lagerbeständige, bei Zutritt von Luftfeuchtigkeit bei Raumtemperatur zu Elastomeren härtbare Massen auf Grundlage von Polyorganosiloxanen, Organosiliciumverbindungen und Titanverbindungen zur Verfügung zu stellen, die gegebenenfalls Füllstoffe und andere übliche Zusätze enthalten können, die über lange Zeiträume, das heißt, einige Monate gelagert werden können, ohne daß sich hierbei ihre Eigenschaften verschlechtern und die darüberhinaus nicht korrosiv sind. Diese Massen können bei Feuchtigkeitszutritt unter Bildung von Elastomeren gehärtet werden, die unabhängig von der Lagerzeit der Massen vor der Härtung unveränderte Eigenschaften aufweisen.

Diese Aufgabe wird erfindungsgemäß dadurch gelöst, daß die Massen als Polyorganosiloxane (1) solche der allgemeinen Formel

$$(R'O)_m \overset{R_{3-m}}{\overset{|}{Si}}O - \left[ \overset{R_a}{\overset{|}{Si}}O_{\frac{4-a}{2}} \right]_b - \overset{R_{3-m}}{\overset{|}{Si}}(OR')_m \qquad I$$

mit einer Viskosität im Bereich von 50 bis 1.000.000 mPa.s. (cP)/25°C, als Organosiliciumverbindungen (2) Silane der allgemeinen Formel

$$R''_n\ Si(OR')_{4-n} \qquad II$$

und/oder Siloxane der allgemeinen Formel

$$(R'O)_z \overset{R_{3-z}}{\overset{|}{Si}}O - \left[ \overset{R_2}{\overset{|}{Si}}O \right]_y - \overset{R_{3-z}}{\overset{|}{Si}}(OR')_z \qquad III$$

in einem Gewichtsverhältnis von (2) zu (1) im Bereich von 1:10 bis 1:50 und Titanester (3) der allgemeinen Formel

$$Ti(OR')_4$$

oder deren Teilhydrolysate in einem Gewichtsverhältnis von (3) zu (1) im Bereich von 1:10 bis 1:40, worin

R einwertige, gegebenenfalls halogenierte Kohlenwasserstoffreste mit 1 bis 18 C-Atomen oder Cyanoalkylreste,

R' aliphastische Kohlenwasserstoffreste mit 1 bis 10 C-Atomen,

R" einwertige, gegebenenfalls halogenierte Kohlenwasserstoffreste mit 1 bis 18 C-Atomen bedeuten,

a einen durchschnittlichen Wert von 1,9 bis 2,0,

b einen Wert von größer als 10,

m einen Wert von mindestens 1,

n einen Wert von 0, 1 oder 2,

y einen Wert von 0 bis 10 und

z einen Wert von 1, 2 oder 3 hat, enthalten, mit der Maßgabe, daß die Reste R' in (1), (2) und (3) identisch sind.

Beispiele für Reste R sind Alkylreste mit 1 bis 18 C-Atomen, wie Methyl-, Äthyl-, Propyl-, Butyl-, Hexyl-, Octyl-, Decyl- und Octadecylreste; Cycloalkylreste, wie Cyclopentyl- und Cyclohexylreste; Arylreste, wie Phenyl- und Naphthylreste; Aralkylreste, wie Benzyl-, alpha- oder beta-Phenyläthylreste und alpha- oder beta- Phenylpropylreste; Alkarylreste, wie Tolyl-, Xylyl- und Äthylphenylreste; halogenierte Kohlenwasserstoffreste, wie Chlormethyl-, Trifluormethyl-, Chlorpropyl-, Chlorphenyl-, Dibromphenyl-, Tetrachlorphenyl- und Difluorphenylreste, sowie Cyanoalkylreste, wie beta-Cyanoäthyl-, gamma-Cyanopropyl- und beta-Cyanopropylreste. Alkylreste mit 1 bis 3 C-Atomen und insbesondere Methylreste sind als Reste R bevorzugt. In den Polyorganosiloxanen entsprechend der allgemeinen Formel I können die Reste R gleich oder verschieden sein.

Beispiele für Reste R' sind Alkylreste mit 1 bis 10 C-Atomen, wie Methyl-, Äthyl-, Propyl-, Butyl-, Hexyl-, Octyl- und Decylreste. Alkylreste mit 1 bis 3 C-Atomen und insbesondere Methyl- und Äthylreste sind als Reste R' bevorzugt.

Beispiele für Reste R" sind die gleichen wie für R unter den einwertigen, gegebenenfalls halogenierten Kohlenwasserstoffresten genannt, wobei ebenfalls Alkylreste mit 1 bis 3 C-Atomen und insbesondere Methylreste bevorzugt sind.

Die Polyorganosiloxane (1) entsprechend der allgemeinen Formel I haben eine Viskosität im Bereich von 50 bis 1.000.000 und vorzugsweise von 50 bis 500.000 cP/25°C. Die R'O-Gruppen können hierein sowohl endständig als auch entlang der Kette angeordnet sein. Vorzugsweise enthalten die Polyorganosiloxane (1) mindestens 2 Si-gebundene R'O-Gruppen je Molekül, insbesondere wenn die Massen zu Elastomeren gehärtet werden sollen, entsprechend einem Wert für m von 2 oder 3 in der allgemeinen Formel I.

Als Polyorganosiloxane (1) sind endständige R'O-Gruppen aufweisende Polydiorganosiloxane bevorzugt, beispielsweise solche der allgemeinen Formel

$$R'O - \underset{R}{\overset{R}{|}}{Si}O - \left[\underset{R}{\overset{R}{|}}{Si}O\right]_c - \underset{R}{\overset{R}{|}}{Si} - OR'$$

worin R und R' die angegebene Bedeutung zukommt und c einen Wert hat, der einer Viskosität von 50 bis 1.000.000 in Pa.s (cP)/25°C entspricht. Vorzugsweise sind hierin alle Reste R Methylreste. Derartige Organopolysiloxane sind bekannt und in den US—PSS 2.415.389, 2.815.300 und 3.161.614 beschrieben.

Die Polyorganosiloxane entsprechend der allgemeinen Formel I können nach mehreren Verfahren hergestellt werden, beispielsweise durch Umsetzung von Hydroxylgruppen aufweisenden Siloxanen der allgemeinen Formel

$$HO - \left[\overset{R_a}{\overset{|}{Si}}O_{\frac{4-a}{2}}\right]_b - H$$

mit Silanen der allgemeinen Formel

$$R''_n\ Si(OR')_{4-n}\ ,$$

worin, R, R', R'', a, b und n die angegebene Bedeutung haben, unter wasserfreien Bedingungen und in Abwesenheit oder in Gegenwart eines Katalysators, der die Reaktion der SiOH-Gruppen mit den Si-gebundenen R'O-Gruppen unterstützt. Beispiele für derartige Katalysatoren sind Amine und Salze von Carbonsäuren mit Metallen, wie Blei, Zinn und Eisen. Ohne Katalysatorzusatz wird das Reaktionsgemisch vorteilhaft auf die Rückflußtemperatur des Silans erhitzt. In Gegenwart des Katalysators kann die Umsetzung bei Raumtemperatur bis zur Rückflußtemperatur des Silans durchgeführt werden. Die Mengen der Reaktionsteilnehmer werden dabei vorteilhaft so berechnet, daß je Mol SiOH-Gruppen in dem Siloxan mindestens 1 Mol des Silans und vorzugsweise 1 bis 10 Mol des Silans vorhanden sind. Außerdem ist es vorteilhaft, jedoch nicht unbedingt erforderlich, den als Nebenprodukt gebildeten Alkohol zu entfernen.

Ein weiteres Verfahren zur Herstellung der Polyorganosiloxane (1) besteht darin, die Hydroxylgruppen enthaltenden Siloxane der oben angegebenen allgemeinen Formel mit einem Chlorsilane der Formel $R_nSiCl(OR')_{3-n}$ in Gegenwart eines Halogenwasserstoffakzeptors, wie Pyridine, alpha-Picolin oder einem tertiären Amin umzusetzen. Unter diesen Bedingungen reagiert das Chloratom des Silans mit den Hydroxylgruppen des Siloxans unter Abspaltung von HCl und Verknüpfung von Silan- und Siloxanresten über Si—O—Si-Bindungen.

Schließlich können die Polyorganosiloxane (1) auch durch Umsetzung von endständige Halogenatome aufweisenden Polyorganosiloxanen der allgemeinen Formel

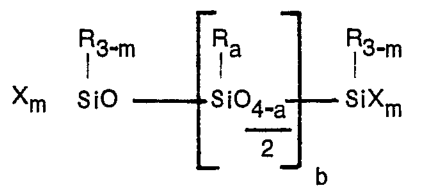

worin X Halogenatome, wie Chlor-, Brom- oder Jodatome bedeutet, mit einem Alkohol der Formel R'OH in Gegenwart eines der oben genannten Halogenwasserstoffakzeptoren bei Raumtemperatur hergestellt werden, wobei die Anzahl der R'O-Gruppen im Endprodukt der Anzahl der im Ausgangsmaterial vorhandenen Halogenatome entspricht.

Die Organosiliciumverbindungen (2) können definitionsgemäß entweder Silane der allgemeinen Formel II und/oder Siloxane der allgemeinen Formel III sein, worin, R, R', R'', n, y and z die oben angegebene Bedeutung haben.

Beispiele für Silane entsprechend der allgemeinen Formel II sind Methyltrimethoxysilan, Methyltriäthoxysilan, Methyltributoxysilan, Methyltrihexoxysilan, Methyltridecoxysilan, Äthyltrimethoxysilan, Äthyltributoxysilan, Äthyltridecoxysilan, Butyltrimethoxysilan, Butyltributoxysilan, Butyldecoxysilan, Octyltrimethoxysilan, Octyltriäthoxysilan, Octyltributoxysilan, Octyltridecoxysilan, Dimethyldimethoxysilan, Dimethyldipropoxysilan, Dimethyldihexoxysilan, Dimethyldioxtoxysilan, Diäthyldiäthoxysilan, Diäthyldibutoxysilan, Diäthyldioctoxysilan, Diäthyldidecoxysilan, Dipropyldimethoxysilan, Dipropyldibutoxysilan, Dipropyldioctoxysilan, Dibutyldimethoxysilan, Dibutyldiäthoxysilan, Dibutyldipropoxysilan, Dibutyldioctoxysilan, Dihexyldiäthoxysilan, Dihexyldipropoxysilan, Dihexyldibutoxysilan, Dihexyldihexoxysilan, Dioctyldimethoxysilan, Dioctyldipropoxysilan, Dioctyldibutoxysilan, Dioctyldioctoxysilan, Tetramethoxysilan, Tetraäthoxysilan, Tetrabutoxysilan, Tetrahexoxysilan, Tetraoctoxysilan und Teilhydrolysate hiervon, die unter der Bezeichnung Polyalkylsilicate bekannt sind, wie Polyäthylsilicat mit einem analytischen $SiO_2$-Gehalt von etwa 40 Gew.-%, Polypropylsilicate und Polybutylsilicate. Als Silane der allgemeinen Formel II sind solche bevorzugt, worin n 0 oder 1 ist.

Beispiele für Siloxane entsprechend der allgemeinen Formel III sind 1,2-Dimethoxy-1,1,2,2-tetramethyldisiloxan, 1,2-Dimethyl-1,1,2,2-tetraäthoxysilan und 1,1,1,2,2,2-Hexamethoxydisiloxan. Siloxane mit weniger als 10 Si-Atomen je Molekül sind bevorzugt. Als Siloxane der allgemeinen Formel III sind insbesondere solche bevorzugt, worin $y = 0$ und $z = 2$.

Die Titanverbindungen (3) sind definitionsgemäß Titanester entsprechend der angegebenen Formel $Ti(OR')_4$, worin R' vorzugsweise Alkylreste mit 1 bis 10 C-Atomen bedeutet oder Teilhydrolysate hiervon.

Beispiele für Titanester sind solche von einwertigen Alkoholen, wie Tetramethyltitanat, Tetraäthyltitanat, Tetraisopropyltitanat, Tetrapropyltitanat, Tetrabutyltitanat, Tetra-(2-äthylhexyl)titanat. Tetrahexyltitanat, Tetraoctyltitanat und Tetradecyltitanat. Als Teilhydrolysate sind benzollössliche Polyester bevorzugt, die mindestens eine Ti—O—Ti-Bindung je Molekül aufweisen.

Die in den erfindungsgemäßen Massen eingesetzten Mengen der Bestandteile (2) und (3) können in weiten Grenzen variiert werden. Das Gewichtsverhältnis der Verbindungen (2) zu den Polyorganosiloxanen (1) kann im Bereich von 1:10 bis 1:50, vorzugsweise im Bereich von 1:15 bis 1:30 liegen. Das Gewichtsverhältnis der Verbindungen (3) zu den Polyorganosiloxanen (1) kann im Bereich von 1:10 bis 1:40 und vorzugsweise im Bereich von 1:15 bis 1:30 liegen. Im allgemeinen ist es bevorzugt, die Verbindungen (2) und (3) in jeweils gleichem Mengenverhältnis einzusetzen, wobei die angegebenen Gewichtsverhältnisse jeweils auf das Gewicht der Polyorganosiloxane (1) bezogen sind.

Manchmal kann es vorteilhaft sein, den Titanester (3) oder die Silane (2) in einer inerten Flüssigkeit zu vermischen, um die einheitliche Dispergierung oder Lösung dieser Komponenten in dem Polyorganosiloxan (1) zu erleichtern. Beispiele für derartige inerte Flüssigkeiten sind aliphatische und cycloaliphatische Kohlenwasserstoffe, wie Cyclohexan und Monomethylcyclohexan, aromatische Kohlenwasserstoffe, wie Benzol, Toluol und Xylol, halogenierte Alkane, Erdölfraktionen mit einem Siedebereich von 153° bis 204°C oder Ester, wie Äthylacetat.

Außerdem ist es vorteilhaft, jedoch nicht unbedingt erforderlich, Füllstoffe in die erfindungsgemäßen Massen einzuarbeiten. Beispiele hierfür sind verstärkende Füllstoffe, wie pyrogen gewonnene $SiO_2$-Arten, die an ihrer Oberfläche Organosilylgruppen tragen, gefällte Kieselsäuren mit großer Oberfläche, Silicaaerogele und nicht verstärkende Füllstoffe, wie Diatomeenerde und Quarzmehl, ferner Metalloxide, wie Titanioxid, Ferrioxid, Zinkoxid und faserartige Füllstoffe, wie Asbest und Glasfasern.

Obwohl die Korngröße der Füllstoffe keine entscheidende Rolle spielt, sind solche mit einem Teilchendurchmesser von etwa 5 nm bis zu etwa 30 $\mu$m bevorzugt. Füllstoffe mit größerem Teilchendurchmesser können verwendet werden, ihre Einarbeitung in die Massen ist jedoch schwieriger.

Die Füllstoffe können in Mengen von 0 bis 200%, bezogen auf das Gewicht der Polyorganosiloxane (1), verwendet werden. Die verwendeten Füllstoffe müssen frei von Wasser, OH-Gruppen und anderen Gruppen sein die mit den Titanestern (3) und den Si-gebundenen Kohlenwasserstoffoxygruppen in (1) und (2) reagieren können. Hydrophobe Füllstoffe, das heißt solche, die mit Organosiliciumverbindungen behandelt worden sind, sind bevorzugt.

Als Organosiliciumverbindungen für die Hydrophobierung der Füllstoffe können solche der allgemeinen Formel

$$(R'''_3\ Si)_e\ Z \text{ oder } R'''_{e'}\ SiZ'_{4-e'}$$

verwendet werden, worin R''' gleiche oder verschiedene, einwertige, gegebenenfalls halogenierte Kohlenwasserstoffreste, Z und Z' Halogenatome, H-Atome oder Reste der Formeln

$$—OR'''',\ —NR''''X',\ —ONR'''',\ —SR'''' \text{ oder } OOCR''''$$

sind. Falls e = 2, können die Reste Z auch zweiwertige Reste der Formeln —O—, NX'— oder —S— sein. Hierin bedeuten R'''' einen Kohlenwasserstoffrest oder einen substituierten Kohlenwasserstoffrest und vorzugsweise einen Alkylrest mit 1 bis 4 C-Atomen, X' ein H-Atom oder R''''; e = 1 oder 2 und e' = 1, 2 oder 3. Nach der Behandlung der Füllstoffe müssen nicht umgesetzte Reste des Hydrophobiermittels entfernt werden, das heißt, die behandelten Füllstoffe müssen praktisch frei von Resten Z und Z' sein, bevor sie in die erfindungsgemäßen Massen eingearbeitet werden.

Beispiel für einwertige, gegebenenfalls halogenierte Kohlenwasserstoffreste R''' sind die gleichen, wie für die Si-gebundenen Reste R'', das heißt, Kohlenwasserstoffreste mit 1 bis 18 C-Atomen, wie Alkyl-, Cycloalkyl-, Aryl-, Alkaryl-, Aralkyl- und die entsprechenden halogenierten Kohlenwasserstoffreste, ferner Alkenylreste, wie der Vinylrest.

Beispiele für Halogenatome Z und Z' sind Chlor-, Brom- und Jodatome. Chloratome sind bevorzugt, da sie leichter verfügbar sind.

Als Reste R''' sind Methyl- und Äthylreste bevorzugt.

Beispiele für substituierte Kohlenwasserstoffreste R'''' sind Methoxyäthylen- und Aminoäthylreste.

Beispiele für Organosiliciumverbindungen, die für die Hydrophobierung der Füllstoffe verwendet werden können, sind Hexamethyldisilazan, Trimethyläthoxysilan, Trimethylchlorsilan, Dimethyldiäthoxysilan, Vinyldimethylacetoxysilan, Trimethylsilylisopropylamin, Trimethylsilyläthylamin, Phenyldimethylsilylpropylamin, Vinyldimethylsilylbutylamin, Diäthylaminoxytrimethylsilan, Diäthylaminoxyphenyldimethylsilan, 1,3-Diphenyltetramethyldisilazan, Dimethyldichlorsilan, Dimethyldimethoxysilan, Diphenyldiäthoxysilan, Vinylmethyldimethoxysilan und Methyltriäthoxysilan. Hexamethyldisilazan ist als Organosiliciumverbindung bevorzugt. Bei Verwendung von Silanen, die Kohlenwasserstoffoxygruppen enthalten, ist es vorteilhaft, wenn diese Kohlenwasserstoffoxygruppen die gleichen sind, wie die Estergruppen in den Titanverbindungen (3) und die Si-gebundenen Kohlenwasserstoffoxygruppen in (2) und (1).

Außer den genannten Füllstoffen können in die erfindungsgemäßen Massen andere übliche Zusätze eingearbeitet werden, wie Pigmente, Antioxidantien, UV-Absorber, Fungicide, Weichmacher und sogenannte innere Weichmacher. Auch hierbei ist es wesentlich, daß diese Zusätze frei von Wasser, OH-Gruppen und anderen Gruppen sind, die mit den Kohlenwasserstoffoxygruppen der Titanester (3) und den Si-gebundenen Kohlenwasserstoffoxygruppen in (1) und (2) reagieren können.

Beispiel für Weichmacher sind Triorganosiloxy-endblockierte Diorganopolysiloxane mit einer Viskosität von 50 bis 250 in Pa.s(cP)/25°C, wie Trimethoxysiloxy-endblockierte Dimethylpolysiloxane, Trimethylsiloxy-endblockierte Methylphenylpolysiloxane, Triäthylsiloxy-endblockierte Diäthylpolysiloxane und Gemische hiervon. Polyorganosiloxane, die an einem Ende mit mindestens einer Kohlenwasserstoffoxygruppe abgesättigt sind, und am anderen Ende mit einer Triorganosiloxygruppe, die als sogenannte innere Weichmacher bezeichnet werden, können ebenfalls verwendet werden. Auch

in diesem Falle ist es wesentlich, daß die endständigen Kohlenwasserstoffoxygruppen die gleichen sind, wie in den Komponenten (1), (2) und (3).

Die erfindungsgemäßen Massen können durch einfaches Vermischen der Bestandteile bei Raumtemperatur unter Ausschluß von Feuchtigkeit in einem Gefäß hergestellt werden, das mit einer Rührvorrichtung und einer Abfüllvorrichtung zum Abfüllen der Produkte in verschließbare Behälter ausgerüstet ist. Vorteilhaft wird dabei das Silan oder Siloxan (2) und der Titanester (3) dem Organopolysiloxan (1) zugefügt und die so erhaltenen Massen, deren Konsistenz von flüssig bis zu steifen Pasten reichen kann, anschließend in flüssigkeitsdichte Behälter abgefüllt, in welchen sie mehrere Monate lang aufbewahrt werden können. Die so hergestellten Massen sind in Abwesenheit von Feuchtigkeit stabil und können für lange Zeiträume ohne Schaden zu erleiden gelagert werden. Während der Lagerung tritt praktisch keine Änderung der physikalischen oder der Anwendungseigenschaften der Massen ein. Das ist insbesondere vom wirtschaftlichen Standpunkt aus von großer Bedeutung, denn hierdurch wird sichergestellt, daß die hinsichtlich Konsistenz und Härtungszeit genau eingestellte Masse keine Änderung während der Lagerung erfährt. Außerdem wurde festgestellt, daß auch bei den daraus hergestellten Elastomeren keine Änderung ihrer Eigenschaften zu befürchten ist, das heißt, diese haben praktisch die gleichen Eigenschaften unabhängig von der Lagerzeit der ungehärteten Massen. Aufgrund dieser Lagerbeständigkeit sind die erfindungsgemäßen Massen besonders nützlich als sogenannte Einkomponentensysteme, die bei Raumtemperatur härtbar sind.

Diese Einkomponentensysteme können für viele Anwendungsgebiete eingesetzt werden, zum Beispiel als Abdichtungs-, Verguß- und Beschichtungsmassen zum Einbetten elektronischer Ausrüstungen, zum Beschichten von Geweben, Glas oder Metall oder zum Abdichten verschiedener Substrate.

Die Massen härten bei Zutritt von Feuchtigkeit, wobei die Luftfeuchtigkeit im allgemeinen ausreichend ist, zusätzlich kann jedoch auch Wasser oder Wasserdampf anderer Herkunft verwendet werden. Obwohl die Härtung bei Raumtemperatur, das heißt, bei Temperaturen von etwa 15 bis 20°C stattfindet, können gegebenenfalls auch höhere Temperaturen angewendet werden, wie überhitzter Wasserdampf.

Die für die Aushärtung erforderliche Zeit kann in weitem Bereich variiert werden in Abhängigkeit von der Art der verwendeten Organopolysiloxane (1), dem Mengenverhältnis der Organosiliciumverbindung (2) und des Titanesters (3), von der Dicke der aufgetragenen Masse, der zur Verfügung stehenden Feuchtigkeit und der Temperatur. Bei Raumtemperatur und in Gegenwart von Luftfeuchtigkeit härten die Massen im allgemeinen innerhalb von einigen Stunden bis etwa 7 Tagen.

## Beispiele

*Füllstoffbehandlung:*

Feinteiliges, pyrogen gewonnenes Siliciumdioxyd mit einer spezifischen Oberfläche von mindestens 50 $m^2/g$ wurde in einem Walzentrommler mit 2—10% Wasser und 10—25% bezogen auf das Gewicht des Füllstoffes, Hexamethyldisilazan 10—18 Stunden bei etwa 15—50°C gestürzt. Der so behandelte Füllstoff wurde anschließend in einem Umluftofen 10—24 Stunden bei 100 bis 150°C getrocknet.

## Beispiel 1

(A) Ein 500 ml Glasgefäß, das mit Rührer, Stickstoff-Einleitungsrohr und Rückflußkühler ausgerüstet war, wurde mit 200 Gewichtsteilen eines flüssigen, endständige Hydroxylgruppen aufweisenden Polydimethylsiloxans mit einer Viskosität mit 4000 in Pa.s(cP)/25°C. 60 Gewichtsteilen eines flüssigen, mit Trimethylsiloxygruppen endblockierten Polydimethylsiloxans mit einer Viskosität von 50 in Pa.s(cP)/25°C und 26 Gewichtsteilen Tetraäthylorthosilicat beschickt. Das Reaktionsgemisch wurde unter Durchleiten von Stickstoff und unter Rühren auf etwa 170°C 18 Stunden unter Rückfluß erhitzt. Anschließend wurden die flüchtigen Bestandteile innerhalb von 6 Stunden bei 110—120°C entfernt und das erhaltene flüssige, endständige Triäthoxygruppen aufweisende Polydimethylsiloxan isoliert.

(B) 100 Gewichtsteile des nach (A) hergestellten, endständige Triäthoxygruppen aufweisenden Polydimethylsiloxans wurden mit 35 Gewichtsteilen des wie oben beschrieben behandelten Füllstoffes vermischt. Dann wurden unter wasserfreien Bedingungen 5 Gewichtsteile Tetraäthyltitanat und 5 Gewichtsteile Methyltriäthoxysilan zugegeben und 10 Minuten eingearbeitet. Das so erhaltene Gemisch wurde in luftdichte Behälter abgefüllt und bei Raumtemperatur gelagert. Nach verschiedenen Zeiträumen wurden Proben entnommen und die physikalischen Eigenschaften der daraus hergestellten Elastomeren gemäß der ASTM-Methode D—142 bestimmt. Die Ergebnisse sind in der folgenden Tabelle I zusammengestellt.

TABELLE I

Physikalische Eigenschaften

| Lagerzeit (Tage) | Shore A-Härte | Zugfestigkeit in N/mm² | (psi) | Dehnung in % | Einreißfestigkeit in N/mm | (lb/in.) |
|---|---|---|---|---|---|---|
| 7 | 45 | 3,91 | (567) | 352 | 34.85 | (199) |
| 28 | 40 | 4,03 | (585) | 390 | 26.44 | (151) |
| 42 | 43 | 3,98 | (577) | 403 | 30.30 | (173) |
| 60 | 40 | 3,67 | (532) | 364 | 28.55 | (163) |
| 180 | 36 | 3,67 | (533) | 441 | 28.55 | (163) |

Beispiel 2

(A) 600 Gewichtsteile des endständige Hydroxylgruppen aufweisenden Polydimethylsiloxans mit einer Viskosität von 4000 in Pa.s(cP)25°C wurden mit 60 Gewichtsteilen Methyltrimethoxysilan 12 Stunden unter Rückfluß erhitzt. Anschließend wurden die flüchtigen Bestandteile aus dem Reaktionsgemisch innerhalb von 5 Stunden bei 110—120°C entfernt und das erhaltene flüssige, endständige Methyldimethoxygruppen aufweisende Polydimethylsiloxan isoliert.

(B) 100 Gewichtsteile des unter (A) hergestellten endständige Methyldimethoxygruppen aufweisenden Polydimethylsiloxans wurden mit 20 Gewichtsteilen eines flüssigen, mit Trimethylsiloxygruppen endblockierten Polydimethylsiloxans mit einer Viskosität von 50 in Pa.s(cP)/25°C und 35 Gewichtsteilen des wie oben beschrieben behandelten Füllstoffes vermischt. Dann wurden unter wasserfreien Bedingungen 10 Gewichtsteile Tetramethyltitanat und 5 Gewichtsteile Methyltrimethoxysilan zugegeben und 10 Minuten eingearbeitet. Das so erhaltene Gemisch wurde in luftdichte Behälter abgefüllt und bei Raumtemperatur gelagert. Nach verschiedenen Zeiträumen wurden jeweils Proben entnommen und die physikalischen Eigenschaften der daraus hergestellten Elastomere gemäß der ASTM-Methode D—412 bestimmt. Die Ergebnisse sind in der folgenden Tabelle II zusammengestellt.

TABELLE II

Physikalische Eigenschaften

| Lagerzeit (Tage) | Shore A-Härte | Zugfestigkeit in N/mm² | (psi) | Dehnung in % | Einreißfestigkeit in N/mm² | (lb/in.) |
|---|---|---|---|---|---|---|
| 7 | 33 | 2,64 | (383) | 374 | 21.72 | (124) |
| 28 | 43 | 2,12 | (307) | 264 | 20.14 | (115) |
| 42 | 40 | 2,09 | (303) | 250 | 19.26 | (110) |

Beispiel 3

(A) Unter gleichen Bedingungen wie in Beispiel 2 (A) beschrieben mit der Abänderung, daß anstelle des Methyltrimethoxysilans Methyltriäthoxysilan verwendent wurde, wurde ein endständige Methyldiäthoxygruppen aufweisendes Polydimethylsiloxan hergestellt.

(B) 100 Gewichtsteile des unter (A) hergestellten endständige Methyldiäthoxygruppen aufweisenden Polydimethylsiloxans wurden mit 20 Gewichtsteilen eines flüssigen mit Trimethylsiloxygruppen endblockierten Polydimethylsiloxans mit einer Viskosität von 50 in Pa.s(cP)/25°C und 35 Gewichtsteilen des wie oben beschrieben behandelten Füllstoffes vermischt. Dann wurden unter wasserfreien Bedingungen 5 Gewichtsteile Methyltriäthoxysilan und 5 Gewichtsteile Tetraäthyltitanat zugegeben und 10 Minuten eingearbeitet. Das so erhaltene Gemisch wurde in luftdichte Behälter abgefüllt und bei Raumtemperatur gelagert. Nach verschiedenen Zeiträumen wurden jeweils Proben entnommen und die physikalischen Eigenschaften der daraus hergestellten Elastomeren gemäß der ASTM-Methode D—412 bestimmt. Die Ergebnisse sind in der folgenden Tabelle III zusammengestellt.

TABELLE III

Physikalische Eigenschaften

| Lagerzeit (Tage) | Shore A-Härte | Zugfestigkeit in N/mm² | (psi) | Dehnung in % | Einreißfestigkeit in N/mm | (lb/in.) |
|---|---|---|---|---|---|---|
| 7 | 32 | 3,14 | (456) | 554 | 21.72 | (124) |
| 28 | 41 | 2,72 | (394) | 429 | 26.09 | (149) |
| 42 | 32 | 3,04 | (441) | 521 | 21.37 | (122) |

Beispiel 4

120 Gewichtsteile des gemäß Beispiel 3 (A) hergestellten flüssigen, endständige Methyldiäthoxygruppen aufweisenden Polydimethylsiloxans wurden mit 35 Gewichtsteilen des wie oben beschrieben behandelten Füllstoffes vermischt. Dann wurden unter wasser freien Bedingungen 5 Gewichtsteile Tetraäthylorthosilicat und 5 Gewichtsteile Tetraäthyltitanat zugegeben und 10 Minuten eingearbeitet. Das so erhaltene Gemisch wurde in luftdichte Behälter abgefüllt und bei Raumtemperatur gelagert. Nach verschiedenen Zeiträumen wurden jeweils Proben entnommen und die physikalischen Eigenschaften der daraus hergestellten Elastomeren gemäß der ASTM-Methode D—412 bestimmt. Die Ergebnisse sind in der folgenden Tabelle IV zusammengestellt.

TABELLE IV

Physikalische Eigenschaften

| Lagerzeit (Tage) | Shore A-Härte | Zugfestigkeit in N/mm² | (psi) | Dehnung in % | Einreißfestigkeit in N/mm | (lb/in.) |
|---|---|---|---|---|---|---|
| 7 | 32 | 3,14 | (456) | 554 | 22.07 | (126) |
| 28 | 41 | 2,72 | (394) | 429 | 26.09 | (149) |
| 42 | 32 | 3,04 | (441) | 521 | 21.37 | (122) |
| 120 | 37 | 3,17 | (460) | 481 | 22.77 | (130) |

Beispiel 5

Das Verfahren gemäß Beispiel 4 wurde wiederholt mit der Abänderung, daß anstelle des Tetraäthylorthosilicats 5 Gewichtsteile 1,2-Dimethyl-1,1,2,2-Tetraäthoxydisiloxan verwendet wurden. Die physikalischen Eigenschaften der Elastomeren, die aus nach 7 bzw. 42 Tagen gelagerten Proben hergestellt worden sind, waren praktisch dieselben.

Beispiel 6

Das Verfahren gemäß Beispiel 1 (A) wurde wiederholt mit der Abänderung, daß anstelle des Tetraäthylorthosilicats Tetrapropylsilicat verwendet wurde.

100 Gewichtsteile des so erhaltenen endständige Tripropoxygruppen aufweisenden Polydimethylsiloxans wurden mit 35 Gewichtsteilen eines pyrogen gewonnenen Siliciumdioxyds, das unter gleichen Bedingungen wie oben beschrieben mit Methyltripropoxysilan behandelt worden war, 5 Gewichtsteilen Tetrapropyltitanat und 5 Gewichtsteilen Methyltripropoxysilan vermischt. Anschließend wurde das Gemisch in luftdichte Behälter abgefüllt. Die physikalischen Eigenschaften der Elastomeren, die aus nach 7 bzw. 42 Tagen gelagerten Proben hergestellt worden waren, waren praktisch dieselben.

Beispiel 7

Das Verfahren gemäß Beispiel 1 (A) wurde wiederholt mit der Abänderung, daß anstelle des Tetraäthylorthosilicats ein Polyäthylsilicat mit einem analytischen $SiO_2$-Gehalt von eta 40 Gew.-% (unter der Bezeichnung "Äthylsilicat 40" im Handel) verwendet wurde.

Die physikalischen Eigenschaften der Elastomeren, die aus nach 7 bzw. 42 Tagen gelagerten Proben hergestellt wurden, waren praktisch dieselben.

*Vergleichsversuch 1:*

100 Gewichtsteile des nach Beispiel 2 (A) hergestellten flüssigen, endständige Methyldimethoxygruppen aufweisenden Polydimethylsiloxans wurden mit 20 Gewichtsteilen eines flüssigen mit Trimethylsiloxygruppen endblockierten Polydimethylsiloxans mit einer Viskosität von 50 in Pa.s(cP)/25°C und 35 Gewichtsteilen des wie oben beschrieben behandelten Füllstoffes vermischt. Dann wurden unter wasserfreien Bedingungen 5 Gewichtsteile Tetraisopropyltitanat und 5 Gewichtsteile Methyltrimethoxysilan zugegeben und 10 Minuten eingearbeitet. Das so erhaltene Gemisch wurde in luftdichte Behälter abgefüllt und bei Raumtemperatur gelagert. Nach verschiedenen Zeiträumen wurden Proben entnommen und die physikalischen Eigenschaften der daraus hergestellten Elastomeren gemäß der ASTM-Methode D—412 bestimmt. Die Ergebnisse sind in der folgenden Tabelle V zusammengestellt.

TABELLE V

Physikalische Eigenschaften

| Lagerzeit (Tage) | Shore A-Härte | Zugfestigkeit in $N/mm^2$ | (psi) | Dehnung in % | Einreißfestigkeit in N/mm | (lb/in.) |
|---|---|---|---|---|---|---|
| 7 | 45 | 3,28 | (476) | 355 | 19.26 | (110) |
| 28 | 43 | 2,45 | (355) | 265 | 8.23 | ( 47) |
| 42 | 42 | 2,17 | (315) | 251 | 7.88 | ( 45) |

Dieser Vergleichsversuch zeigt, daß bei Einsatz eines gemischten Systems, d.h. einer Masse, in der sowohl Methoxygruppen als auch Isopropoxygruppen vorhanden sind, eine beträchtliche Veränderung, d.h. Verschlechterung der Eigenschaften nach einer Lagerzeit von 28 Tagen zu beobachten ist im Gegensatz zu einem einheitlichen System gemäß der Erfindung, d.h. einer Masse, in der beispielsweise nur Methoxygruppen vorhanden sind, wie in Beispiel 2.

*Vergleichsversuch 2:*

Unter gleichen Bedingungen, wie in Vergleichsversuch 1 beschrieben, mit der Abänderung, daß 10 Gewichtsteile des Tetraisopropyltitanats verwendet wurden, wurden die in Tabelle VI zusammengestellten Ergebnisse erhalten.

TABELLE VI

Physikalische Eigenschaften

| Lagerzeit (Tage) | Shore A-Härte | Zugfestigkeit in $N/mm^2$ | (psi) | Dehnung in % | Einreißfestigkeit in N/mm | (lb/in.) |
|---|---|---|---|---|---|---|
| 7 | 34 | 3,23 | (469) | 493 | 30.30 | (173) |
| 28 | 40 | 1,66 | (241) | 264 | 21.01 | (120) |
| 60 | 38 | 2,07 | (300) | 315 | 16.29 | ( 93) |
| 120 | 36 | 1,83 | (265) | 315 | 5.25 | ( 30) |

*Vergleichsversuch 3:*

Unter gleichen Bedingungen, wie in Vergleichsversuch 1 beschrieben, mit der Abänderung, daß 10 Gewichtsteile Methyltrimethoxysilan verwendet wurden, wurden die in Tabelle VII zusammengestellten Ergebnisse erhalten. Die Versuche 2 und 3 zeigen, daß auch bei Veränderung des Mengenverhältnisses von Organosiliciumverbindung zu Titanester nach einer Lagerzeit von 28 Tagen schlechtere Eigenschaften, insbesondere eine schlechtere Einreißfestigkeit zu beobachten waren.

TABELLE VII

Physikalische Eigenschaften

| Lagerzeit (Tage) | Shore A-Härte | Zugfestigkeit in N/mm² | (psi) | Dehnung in % | Einreißfestigkeit in N/mm | (lb/in.) |
|---|---|---|---|---|---|---|
| 7 | 47 | 4,46 | (647) | 457 | 34.15 | (195) |
| 28 | — | 2,39 | (347) | — | 26.44 | (151) |
| 60 | 46 | 3,75 | (544) | 354 | 21.72 | (124) |
| 120 | 47 | 2,81 | (408) | 304 | 17.86 | (102) |
| 150 | 41 | 2,38 | (346) | 338 | 8.23 | ( 47) |

*Vergleichsversuch 4:*

Unter gleichen Bedingungen, wie in Vergleichsversuch 1 beschrieben, mit der Abänderung, daß anstelle des endständige Methyldimethoxygruppen aufweisenden Polydimethylsiloxans das endständige Triäthoxygruppen aufweisende Polydimethylsiloxan gemäß Beispiel 1 (A) eingesetzt wurde, waren nach Lagerzeiten von 7 bzw. 42 Tagen praktisch die gleichen verschlechterten Eigenschaften wie in Vergleichsversuch 1 zu beobachten.

**Patentansprüche**

1. Unter Ausschluß von Wasser lagerbeständige, bei Zutritt von Luftfeuchtigkeit bei Raumtemperatur zu Elastomeren härtbare Massen auf Grundlage von Polyorganosiloxanen, Organosiliciumverbindungen und Titanestern, gegebenenfalls Füllstoffen und anderen üblichen Zusätzen, dadurch gekennzeichnet, daß sie als Polyorganosiloxane (1) solche der allgemeinen Formel

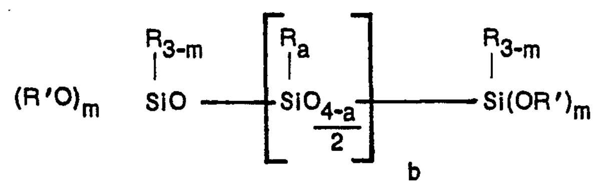

mit einer Viskosität im Bereich von 50 bis 1.000.000 mPa.s (cP)/25°C, als Organosiliciumverbindungen (2) Silane der allgemeinen Formel

$$R''_n\, Si(OR')_{4-n} \qquad II$$

und/oder Siloxane der allgemeinen Formel

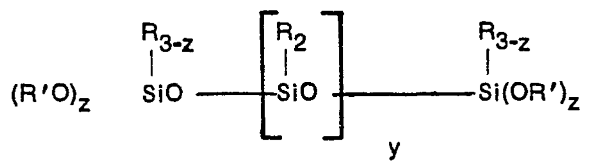

in einem Gewichtsverhältnis von (2) zu (1) im Bereich von 1:10 bis 1:50 und Titanester (3) der allgemeinen Formel

$$Ti(OR')_4$$

oder deren Teilhydrolysate in einem Gewichtsverhältnis von (3) zu (1) im Bereich von 1:10 bis 1:40, worin

R einwertige, gegebenenfalls halogenierte Kohlenwasserstoffreste mit 1 bis 18 C-Atomen oder Cyanoalkylreste,

R′ aliphatische Kohlenwasserstoffreste mit 1 bis 10 C-Atomen,

R'' einwertige, gegebenenfalls halogenierte Kohlenwasserstoffreste mit 1 bis 18 C-Atomen bedeuten,

a einen durchschnittlichen Wert von 1,9 bis 2,0,

b einen Wert von größer als 10,

m einen Wert von mindestens 1,

n einen Wert von 0, 1 oder 2,

y einen Wert von 0 bis 10 und

z einen Wert von 1, 2 oder 3 hat, enthalten, mit der Maßgabe, daß die Reste R' in (1), (2) und (3) identisch sind.

2. Massen nach Anspruch 1, dadurch gekennzeichnet, daß sie als Polyorganosiloxane (1) solche der allgemeinen Formel

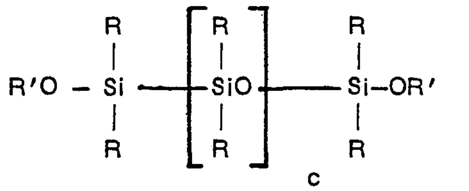

enthalten, worin R und R' die angegebene Bedeutung haben und c einen Wert hat, der der Viskosität von 50 bis 1.000.000 in Pa.s(cP)/25°C entspricht.

3. Massen nach Anspruch 1, dadurch gekennzeichnet, daß sie als Polyorganosiloxane (1), Organosiliciumverbindungen (2) und Titanverbindungen (3) solche der angegebenen Formeln enthalten, worin R, R' und R'' Alkylreste mit 1 bis 3 C-Atomen sind,

m = 2 oder 3,

n = 0 oder 1,

y = 0 und

z = 2.

4. Massen nach Anspruch 1, dadurch gekennzeichnet, daß sie einen hydrophoben Füllstoff enthalten.

**Revendications**

1. Compositions pouvant être conservées à l'abri de l'eau, durcissables à la température ambiante en présence de l'humidité de l'air en donnant des élastomères, ces compositions étant à base de polyorganosiloxanes, de composés organiques du silicium et d'un ester d'un acide de titane, et contenant éventuellement des charges et d'autres additifs usuels et étant caractérisées en ce qu'elles comportent comme polyorganosiloxanes (1) ceux répondant à la formule générale:

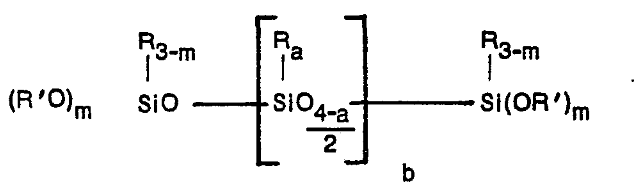

et ayant à 25°C une viscosité comprise entre 50 et 1 000 000 mPa.s, comme composés organiques du silicium (2) des silanes de formule générale:

$$R''_n\ Si(OR')_{4-n}$$

ou des siloxanes de formule générale:

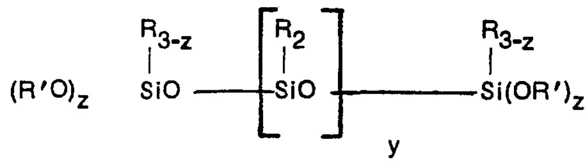

ou des silanes et des siloxanes, selon un rapport pondéral de (2) à (1) se situant entre 1:10 et 1:50, et des esters titaniques (3) de formule générale:

$Ti(OR')_4$

ou un de leurs hydrolysats partiels, selon un rapport pondéral (3) à (1) se situant entre 1:10 et 1:40,

les symboles R représentant des restes monovalents d'hydrocarbures éventuellement halogénés et comportant 1 à 18 atomes de carbone ou des restes cyanoalkyles,

les symboles R′ représentant des radicaux d'hydrocarbures aliphatiques comportant 1 à 10 atomes de carbone;

les symboles R″ représentant des restes d'hydrocarbures éventuellement halogénés comportant 1 à 18 atomes de carbone;

a valant en moyenne de 1,9 à 2,0;
b valant plus de 10;
m valant au moins 1;
n valant 0, 1 ou 2;
y valant de 0 à 10; et
z valant 1, 2 ou 3,

étant bien entendu que les restes R′ sont identiques dans (1), (2) et (3).

2. Compositions selon la revendication 1, caractérisée en ce qu'elles contiennent comme polyorganosiloxanes (1) ceux répondant à la formule générale:

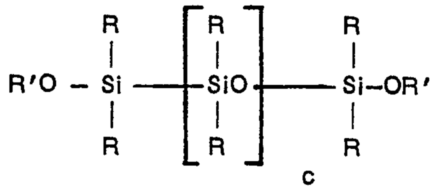

dans laquelle les symboles R et R′ ont le sens indiqué et c a une valeur correspondant à une viscosité à 25°C comprise entre 50 et 1 000 000 de mPa.s.

3. Compositions selon la revendication 1, caractérisées en ce qu'elles contiennent comme polyorganosiloxanes (1), composés organiques du silicium (2) et composés (3) dérivant du titane ceux répondant aux formules indiquées dans les quelles R, R′ et R″ sont des restes alkyles ayant 1 à 3 atomes de carbone, m vaut 2 ou 3; n est nul ou vaut 1; y est nul et z vaut 2.

4. Compositions selon la revendication 1, caractérisées en ce qu'elles contiennent une charge rendue hydrophobe.

**Claims**

1. Compositions on the basis of organopolysiloxanes, organosilicon compounds, and titanium esters, optionally fillers and other usual additives, which are stable under anhydrous conditions, but when exposed to atmospheric moisture cure to elastomers at room temperature, characterized in that they contain as organopolysiloxanes (1) those of the general formula

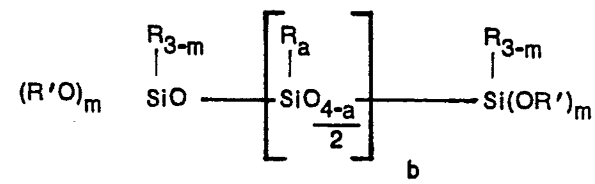

having a viscosity in the range of from 50 to 1,000,000 mPa.s(cP)/25°C, as organosilicon compounds (2) silanes of the general formula

$$R''_n\ Si(OR')_{4-n}$$

and/or siloxanes of the general formula

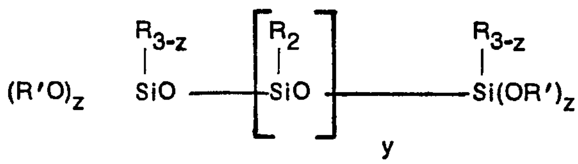

in a weight ratio of (2) to (1) in the range of from 1:10 to 1:50, and titanium esters (3) of the general formula

$$Ti(OR')_4$$

or partial hydrolyzates thereof in a weight ratio of (3) to (1) in the range of from 1:10 to 1:40, wherein R represents monovalent, optionally halogenated, hydrocarbon radicals having from 1 to 18 C-atoms or cyanoalkyl radicals,

R' represents aliphatic hydrocarbon radicals having from 1 to 10 C-atoms,

R'' represents monovalent, optionally halogenated, hydrocarbon radicals having from 1 to 18 C-atoms,

a has an average value of from 1.9 to 2.0,

b has a value greater than 10,

m has a value of at least 1,

n has a value of 0, 1 or 2,

y has a value of from 0 to 10, and

z has a value of 1, 2 or 3,

with the proviso that the R' radicals in (1), (2) and (3) are identical.

2. Compositions according to Claim 1, characterized in that they contain as organopolysiloxanes (1) those of the general formula

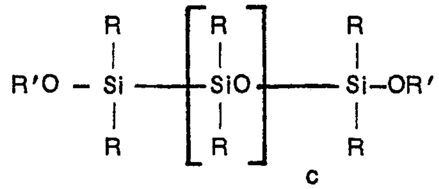

wherein R and R' have the meanings indicated above, and c has a value corresponding to a viscosity of from 50 to 1,000,000 mPa.s (cP)/25°C.

3. Compositions according to Claim 1, characterized in that they contain as organopolysiloxanes (1), organosilicon compounds (2) and titanium compounds (3) those of the indicated formulae, wherein R, R' and R'' represent alkyl radicals having from 1 to 3 C-atoms, and

m is 2 or 3,

n is 0 or 1,

y is 0, and

z is 2.

4. Compositions according to Claim 1, characterized in that they contain a hydrophobic filler.